# EUROPEAN PATENT APPLICATION

(11) **EP 4 216 673 A1**
(43) Date of publication of application: **26.07.2023**
(21) Application number: 22212950.4
(22) Date of filing: 12.12.2022
(51) Int. Cl.: H05B 45/345, H05B 45/375

(54) **LED DRIVE CIRCUIT AND LIGHTING APPARATUS**

(30) Priority: 24.01.2022 CN 202210082216
(71) Applicant: Leedarson Lighting Co., Ltd., Changtai Zhangzhou Fujian (CN)
(72) Inventor: LIN, Qiqiang, Fuijan (CN); LIU, Zongyuan, Fuijan (CN); YE, Hemu, Fuijan (CN); LI, Yankun, Fuijan (CN); WU, Yongqiang, Fuijan (CN)
(74) Representative: Canzler & Bergmeier Patentanwälte Partnerschaft mbB

(57) **Abstract**

The present invention is applicable to the field of lighting technology, and provides an LED drive circuit and a lighting apparatus. The LED drive circuit includes a first voltage input sub-circuit (11), a first non-isolated LED constant-current driver chip (U1), a first inductor (L1) and a first fly-wheel diode (D1). An input of the first voltage input sub-circuit (11) is configured to be connected with an external power supply, an output of the first voltage input sub-circuit (11) is in connection with a first end of the first inductor (L1), and the output of the first voltage input sub-circuit (11) is also configured to be connected with a negative electrode of the LED string light. A second end of the first inductor (L1) is in connection with an anode of the first fly-wheel diode (D1) and a drain of an internal MOSFET of the first non-isolated LED constant-current driver chip (U1). A cathode of the first fly-wheel diode (D1) is in connection with a power-supply pin of the first non-isolated LED constant-current driver chip (U1), and the cathode of the first fly-wheel diode (D1) is also configured to be connected with a positive electrode of the LED string light. In the present invention, power is supplied to the driver chip through the positive electrode or negative electrode of the LED string light, such that the loss of the drive circuit is effectively reduced, and the drive efficiency of the drive circuit is improved.

## Description

### FIELD OF INVENTION

This invention relates to the field of lighting apparatus technology, and in particular, to an LED drive circuit and a lighting apparatus.

### BACKGROUND

With the increasing shortage of energy and environmental problems, the LED apparatus is widely applied to the field of lighting apparatus by virtue of energy conservation and environmental protection. The LED apparatus is a typical current-type device, and generally adopts a constant-current driving mode. As lighting products have higher light efficiency requirements and higher efficiency of the drive circuit is desired.

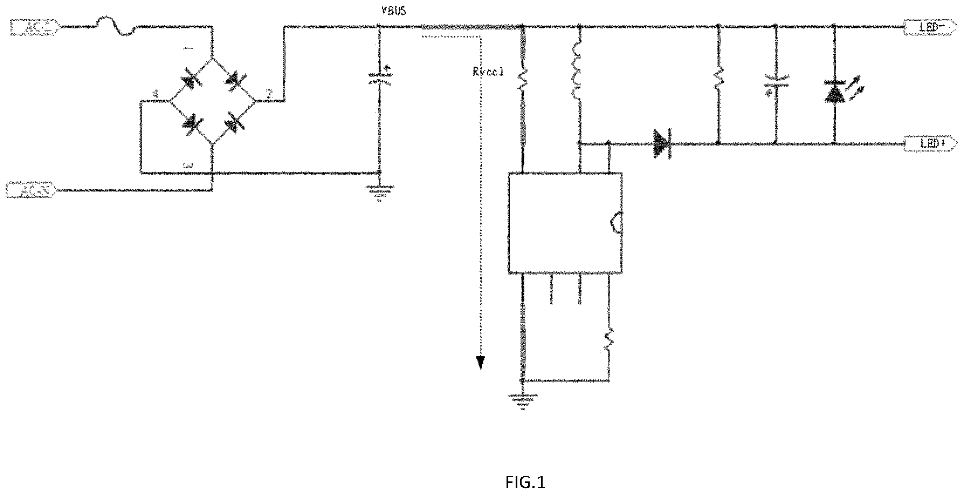

In the existed technologies, a non-isolated constant-current driver chip may be used for driving the LED string light to emit light, for example, referring to FIG. 1, a rectification portion directly supplies power to the constant-current driver chip via a resistor, and the efficiency of a drive circuit is not high enough to meet the requirement of high light efficiency.

### SUMMARY OF INVENTION

In view of this, embodiments of the present invention provide an LED drive circuit and a lighting apparatus, to solve the problem that a driving circuit, using a non-isolated constant-current driver chip, in the existed technologies is not high enough in driving efficiency and cannot meet the requirement of high light efficiency.

A first aspect of the embodiments of the present invention provides an LED drive circuit, which includes: a first voltage input sub-circuit, a first non-isolated LED constant-current driver chip, a first inductor and a first fly-wheel diode.

An input of the first voltage input sub-circuit is configured to be connected with an external power supply, an output of the first voltage input sub-circuit is connected with a first end of the first inductor, and the output of the first voltage input sub-circuit is also configured to be connected with a negative electrode of an LED string light.

A second end of the first inductor is in connection with an anode of the first fly-wheel diode and a drain of an internal MOSFET of the first non-isolated LED constant-current driver chip, respectively.

A cathode of the first fly-wheel diode is in connection with a power-supply pin of the first non-isolated LED constant-current driver chip, and the cathode of the first fly-wheel diode is also configured to be connected with a positive electrode of the LED string light.

Optionally, the LED drive circuit also includes a first output filter sub-circuit.

A first end of the first output filter sub-circuit is in connection with the first end of the first inductor, and a second end of the first output filter sub-circuit is in connection with the cathode of the first fly-wheel diode.

The first output filter sub-circuit is configured for filtering.

Optionally, the first output filter sub-circuit includes: a first capacitor and a first resistor.

A first end of the first capacitor is in connection with a first end of the first resistor and the first end of the first output filter sub-circuit, respectively. A second end of the first capacitor is in connection with a second end of the first resistor and the second end of the first output filter sub-circuit, respectively.

Optionally, the LED drive circuit also includes a second resistor.

A first end of the second resistor is in connection with a current detection pin of the first non-isolated LED constant-current driver chip, and a second end of the second resistor is grounded.

Optionally, the external power supply is an alternating-current power supply. The first voltage input sub-circuit includes a rectifier bridge and a second capacitor.

A first input of the rectifier bridge is configured to be connected with a null line of the external power supply, and a second end of the rectifier bridge is configured to be connected with a live line of the external power supply. A first output of the rectifier bridge is in connection with the output of the first voltage input sub-circuit and a first end of the second capacitor, respectively. A second output of the rectifier bridge is grounded.

A second end of the second capacitor is grounded.

Optionally, the first voltage input sub-circuit also includes an over-current protection element.

A first end of the over-current protection element is configured to be connected with the live line of the external power supply, and a second end of the over-current protection element is in connection with the first input of the rectifier bridge.

A second aspect of the embodiments of the present invention provides an LED drive circuit, which includes: a second voltage input sub-circuit, a second non-isolated LED constant-current driver chip, a second inductor and a second fly-wheel diode.

An input of the second voltage input sub-circuit is configured to be connected with an external power supply, an output of the second voltage input sub-circuit is in connection with a cathode of the second fly-wheel diode, and the output of the second voltage input sub-circuit is also configured to be connected with a positive electrode of an LED string light.

An anode of the second fly-wheel diode is in connection with a first end of the second inductor and a drain of an internal MOSFET of the second non-isolated LED constant-current driver chip, respectively.

A second end of the second inductor is in connection with the power-supply pin of the second non-isolated LED constant-current driver chip, and a second end of the second inductor is also configured to be connected with a negative electrode of the LED string light.

Optionally, the LED drive circuit also includes a second output filter sub-circuit.

A first end of the second output filter sub-circuit is in connection with the cathode of the second fly-wheel diode, and a second end of the second output filter sub-circuit is in connection with the second end of the second inductor.

The second output filter sub-circuit is configured for filtering.

Optionally, the LED drive circuit also includes a third resistor.

A first end of the third resistor is in connection with a current detection pin of the second non-isolated LED constant-current driver chip, and a second end of the third resistor is grounded.

A third aspect of the embodiments of the present invention provides a lighting apparatus, which includes the LED drive circuit as provided in the first aspect of the embodiments of the present invention or the LED drive circuit as provided in the second aspect of the embodiments of the present invention.

In accordance with the embodiments of the present invention an LED drive circuit and a lighting apparatus are provided. The above LED drive circuit includes: a first voltage input sub-circuit, a first non-isolated LED constant-current driver chip, a first inductor and a first fly-wheel diode. An input of the first voltage input sub-circuit is configured to be connected with an external power supply, an output of the first voltage input sub-circuit is in connection with a first end of the first inductor, and the output of the first voltage input sub-circuit is also configured to be connected with a negative electrode of an LED string light. A second end of the first inductor is in connection with an anode of the first fly-wheel diode and a drain of an internal MOSFET of the first non-isolated LED constant-current driver chip, respectively. A cathode of the first fly-wheel diode is in connection with a power-supply pin of the first non-isolated LED constant-current driver chip, and the cathode of the first fly-wheel diode is also configured to be connected with a positive electrode of the LED string light. In the embodiments of the present invention, the driver chip is powered through the positive electrode or the negative electrode of the LED string light, so that the loss of the drive circuit is effectively reduced, and the driving efficiency of the drive circuit is improved.

### BRIEF DESCRIPTION OF DRAWINGS

In order to illustrate solutions in the embodiments of the present invention more clearly, the drawings needed to be used in descriptions of the embodiments or the existed technologies will be briefly introduced below. It will be apparent that the drawings in the following description are only some embodiments of the present invention, and for those skilled in the art other drawings may also be obtained based on these drawings without any creative effort.
- FIG. 1: is a schematic circuit diagram of an LED drive circuit of a BUCK architecture provided in the existed technologies;
- FIG. 2: is a topology diagram of an LED drive circuit according to an embodiment of the present invention;
- FIG. 3: is a schematic circuit diagram of the LED drive circuit according to an embodiment of the present invention;
- FIG. 4: is a schematic circuit diagram of the LED drive circuit with BUCK architecture provided in the existed technologies;
- FIG. 5: is a topology diagram of another LED drive circuit according to an embodiment of the present invention; and
- FIG. 6: is a schematic circuit diagram of another LED drive circuit according to an embodiment of the present invention.

### DETAILED DESCRIPTION

In the following description, for purposes of explanation rather than limitation, specific details are set forth, such as particular system structures, techniques, etc. to provide a thorough understanding of the embodiments of the present invention. It will be apparent, however, to one skilled in the art that the present invention may be practiced in other embodiments that depart from these specific details. In other instances, detailed descriptions of well-known systems, devices, circuits, and methods are omitted so as not to obscure the description of the present invention with unnecessary detail.

In order to explain the solutions of the present invention, the following description will be given by way of specific embodiments.

FIG. 1 shows an LED drive circuit of a BUCK architecture using a non-isolated LED constant-current driver chip in the existed technologies, a rectification portion directly supplies power to the chip through a power-supply resistor Rvcc1, and a power supply loop is shown in FIG. 1. Assuming that a voltage of an AC (alternate current) power supply is 230V, the rectified voltage V_{bus} is 230V ^{∗} 1.414, and an operating current I_{cc} of the chip is 300uA, a loss of chip Pic is 230V ^{∗} 1.414 ^{∗} 300uA = 0.097566W. If an operating power of the lighting apparatus is 5W, a ratio of the loss of the chip in the power of the lighting apparatus is about 0.097566W/5W = 1.95132%, such that the loss is large, and the efficiency is low, which is not conducive to improving the lighting effect of the lighting apparatus.

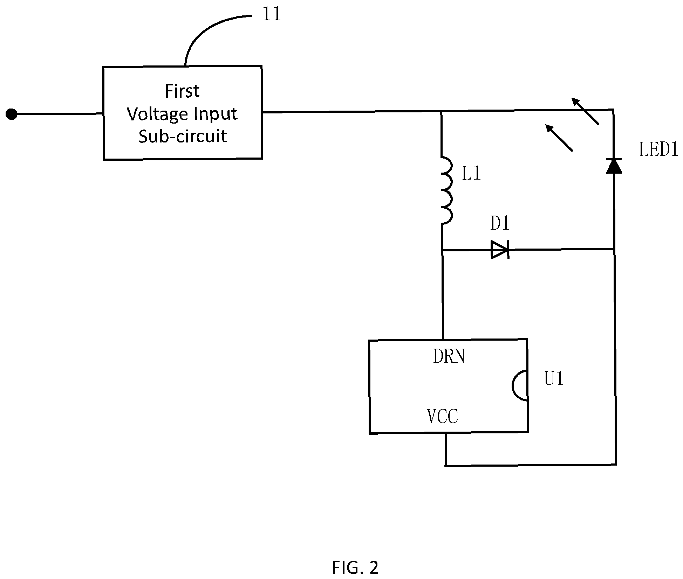

In view of the above, referring to FIG. 2, an embodiment of the present invention provides an LED drive circuit, which includes: a first voltage input sub-circuit 11, a first non-isolated LED constant-current driver chip U1, a first inductor L1 and a first fly-wheel diode D1.

An input of the first voltage input sub-circuit 11 is configured to be connected with an external power supply, an output of the first voltage input sub-circuit 11 is in connection with a first end of the first inductor L1, and the output of the first voltage input sub-circuit 11 is also configured to be connected with a negative electrode of the LED string light LED1.

A second end of the first inductor L1 is in connection with an anode of the first fly-wheel diode D1 and a drain of an internal MOSFET of the first non-isolated LED constant-current driver chip U1, respectively.

A cathode of the first fly-wheel diode D1 is in connection with a power-supply pin of the first non-isolated LED constant-current driver chip U1, and the cathode of the first fly-wheel diode D1 is also configured to be connected with a positive electrode of the LED string light LED 1.

In the LED drive circuit of the BUCK-BUST structure provided by the embodiment of the present invention, a power supply resistor is omitted, and power is supplied to a first non-isolated LED constant-current driver chip U1 through the positive electrode of an LED string light LED 1. Because the voltage at the positive electrode of the LED string light LED1 is relatively low, so the loss of the chip is effectively reduced and the driving efficiency of the drive circuit is improved on the premise that the normal operations of the chip can be met. Meanwhile, in the embodiment of the present invention the power supply resistor is omitted, thus the circuit is simplified and the cost is reduced.

In this embodiment, the voltage at the positive electrode of the LED string light 1 is arranged to be greater than a starting voltage of the power-supply pin of the first non-isolated LED constant-current driver chip, to ensure the normal operations of the first non-isolated LED constant-current driver chip.

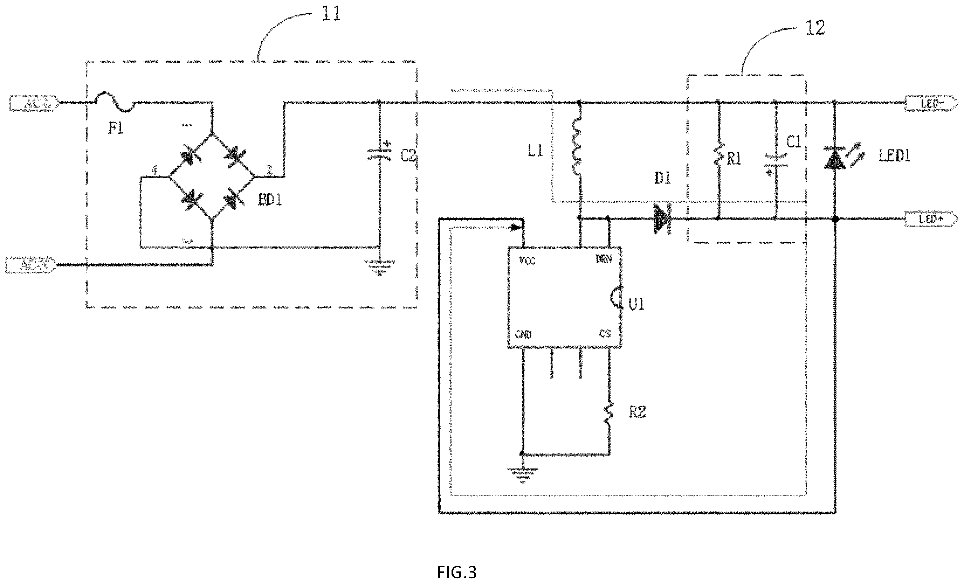

In some embodiments, referring to FIG. 3, the LED drive circuit may also include a first output filter sub-circuit 12.

A first end of the first output filter sub-circuit 12 is in connection with a first end of the first inductor L1, and a second end of the first output filter sub-circuit 12 is in connection with a cathode of the first fly-wheel diode D1.

The first output filter sub-circuit 12 is configured for filtering.

In the embodiment of the present invention, the LED drive circuit is also provided with a first output filter sub-circuit 12 configured for filtering, so that the power supply stability of the LED string light is improved.

In some embodiments, referring to FIG. 3, the first output filter sub-circuit 12 may include a first capacitor C1 and a first resistor R1.

A first end of the first capacitor C1 is in connection with a first end of the first resistor R1 and the first end of the first output filter sub-circuit 12, respectively. A second end of the first capacitor C1 is in connection with a second end of the first resistor R1 and the second end of the first output filter sub-circuit 12, respectively.

In some embodiments, referring to FIG. 3, the LED drive circuit may also include a second resistor R2.

A first end of the second resistor R2 is in connection with a current detection pin of the first non-isolated LED constant-current driver chip U1, and a second end of the second resistor R2 is grounded.

In an embodiment of the present invention, the LED drive circuit is also provided with a second resistor R2, and the second resistor R2 is a sampling resistor.

In some embodiments, the external power source is an AC power source; the first voltage input sub-circuit 11 may include a rectifier bridge BD1 and a second capacitor C2.

A first input of the rectifier bridge BD1 is configured to be connected with a null line of the external power supply, and a second end of the rectifier bridge BD1 is configured to be connected with a live line of the external power supply. A first output of the rectifier bridge BD1 is in connection with an output of the first voltage input sub-circuit 11 and a first end of the second capacitor C2, respectively. A second output of the rectifier bridge BD1 is grounded.

A second end of the second capacitor C2 is grounded.

In the embodiments of the present invention, the rectifier bridge BD1 is adopted for rectification, and the second capacitor C2 is combined for filtering, thereby the circuit structure is simple, and the rectification effect is good.

In some embodiments, referring to FIG. 3, the first voltage input sub-circuit 11 may also include an over-current protection element F1.

A first end of the over-current protection element F1 is configured to be connected with the live line of the external power supply, and a second end of the over-current protection element F1 is in connection with the first input of the rectifier bridge BD1.

Referring to FIG. 3, the power is directly supplied to the first non-isolated LED constant-current driver chip through the positive electrode of the LED string light LED1, and the power supply loop is shown FIG. 3. It is assumed that the component parameters in FIG. 3 is the same as those in FIG. 1. Similarly, assuming that the voltage of the AC power supply is 230V, the rectified voltage V_{bus} is 230V ^{∗} 1.414, the operating current I_{cc} of the chip is 300uA, and the operating voltage Vied of the LED string light LED1 is 160V, the loss of chip P_{ic} is (V_{bus}-V_{led}) ^{∗} I_{cc} =(230V^{∗}1.414-160V) ^{∗} 300uA = 0.049566W. Similarly, assuming that the overall operating power is 5W, the percentage of the loss of chip in the overall power is about 0.049566W/5W=0.99132%. Compared with the loss of chip in the existed technologies which accounts for 1.95132%, the efficiency is improved by about 1%. And the lower the power of the whole machine is, the more obvious the improvement of the driving efficiency is. It thus can be seen from the above that, in the drive circuit provided by the embodiment of the present invention, the driving efficiency can be effectively improved, which has great significance for the development of high-light-efficiency lighting apparatus.

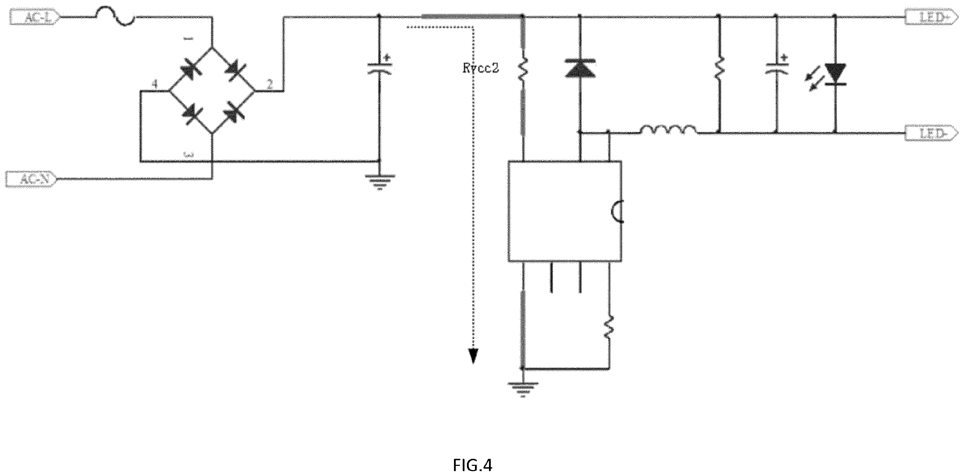

FIG. 4 shows an LED drive circuit with BUCK architecture in the existed technologies, the power is supplied by rectification portion to the chip directly through a supply resistor Rvcc2, and the power supply loop is shown in FIG. 4. Similarly, as the rectification portion directly supplies power to the chip through the power supply resistor Rvcc2, so that the loss is large and the efficiency is low.

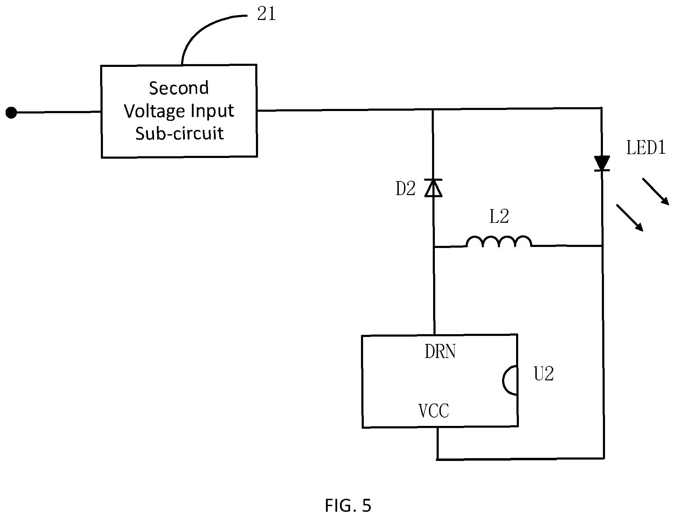

in view of the above, referring to FIG. 5, an embodiment of the present invention further provides an LED drive circuit, which includes: a second voltage input sub-circuit 21, a second non-isolated LED constant-current driver chip U2, a second inductor L2, and a second fly-wheel diode D2.

An input of the second voltage input sub-circuit 21 is configured to be connected with an external power supply, an output of the second voltage input sub-circuit 21 is in connection with a cathode of the second fly-wheel diode D2, and the output of the second voltage input sub-circuit 21 is also configured to be connected with the positive electrode of the LED string light LED1.

An anode of the second fly-wheel diode D2 is in connection with a first end of the second inductor L2 and a drain of an internal MOSFET of the second non-isolated LED constant-current driver chip U2, respectively.

A second end of the second inductor L2 is in connection with the power-supply pin of the second non-isolated LED constant-current driver chip U2, and the second end of the second inductor L2 is also configured to be connected with the negative electrode of the LED string light LED1.

An embodiment of the present invention also provides the LED drive circuit of the BUCK structure, the power is directly supplied to the chip through the negative electrode of the LED string light LED1, the power supply voltage is relatively low, the loss is small, and the efficiency is high. The specific principle is the same as above, which is not repeated herein.

Similarly, the voltage at the negative electrode of the LED string light LED1 is arranged to be greater than the starting voltage of the power-supply pin of the second non-isolated LED constant-current driver chip, to ensure the normal operation of the second non-isolated LED constant-current driver chip.

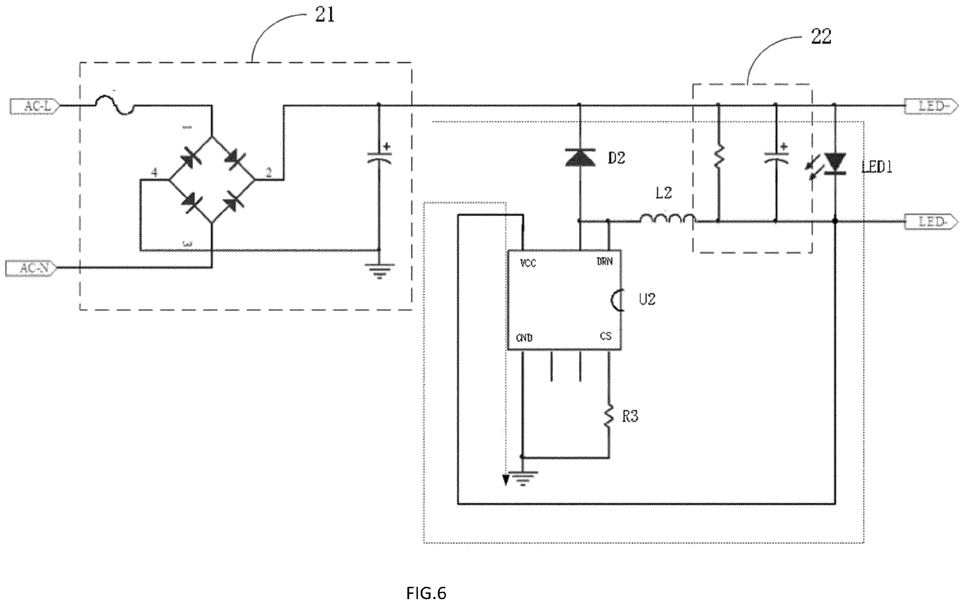

In some embodiments, referring to FIG. 6, the LED drive circuit may also include a second output filter sub-circuit 22.

A first end of the second output filter sub-circuit 22 is in connection with the cathode of the second fly-wheel diode D2, and a second end of the second output filter sub-circuit 22 is in connection with the second end of the second inductor L2.

The second output filter sub-circuit 22 is configured for filtering.

In this embodiment, the schematic circuit diagram of the second output filter sub-circuit 22 may be referred to FIG. 6, which is not repeated herein.

In some embodiments, referring to FIG. 6, the LED drive circuit may also include a third resistor R3.

A first end of the third resistor R3 is in connection with the current detection pin of the second non-isolated LED constant-current driver chip U2, and the second end of the third resistor R3 is grounded.

The schematic circuit diagram of the second voltage input sub-circuit 21 may be referred to FIG. 6, which is not described herein.

An embodiment of the present invention also provides a lighting apparatus, which includes the LED drive circuit shown in FIG. 2 or the LED drive circuit shown in FIG. 5.

The above embodiments are merely used for illustration of the solutions of the present application, and are not intended to limit the present application. Although the present application has been described in detail with reference to the foregoing embodiments, it should be understood to those of ordinary skill in the art that the solutions recorded in the above embodiments may be modified, or some features thereof may be equivalently replaced. These modifications or replacements do not cause the essence of the corresponding technical solutions to deviate from the spirit and scope of the solutions of the embodiments of the present application, and should all be included within the protection scope of the present application.

## Claims

1. An LED drive circuit, comprising:
a first voltage input sub-circuit (11), a first non-isolated LED constant-current driver chip (U1), a first inductor (L1), and a first fly-wheel diode (D1);
wherein an input of the first voltage input sub-circuit (11) is configured to be connected with an external power supply, an output of the first voltage input sub-circuit (11) is in connection with a first end of the first inductor (L1), and the output of the first voltage input sub-circuit (11) is further configured to be connected with a negative electrode of an LED string light (LED1);
wherein a second end of the first inductor (L1) is in connection with an anode of the first fly-wheel diode (D1) and a drain of an internal metal-oxide-semiconductor field effect transistor (MOSFET) of the first non-isolated LED constant-current driver chip (U1), respectively; and
wherein a cathode of the first fly-wheel diode (D1) is in connection with a power-supply pin of the first non-isolated LED constant-current driver chip (U1), and the cathode of the first fly-wheel diode (D1) is further configured to be connected with a positive electrode of the LED string light (LED1).

2. The LED drive circuit according to claim 1, further comprising: a first output filter sub-circuit (12);
wherein a first end of the first output filter sub-circuit (12) is in connection with the first end of the first inductor (L1), and a second end of the first output filter sub-circuit (12) is in connection with the cathode of the first fly-wheel diode (D1); and the first output filter sub-circuit (12) is configured for filtering.

3. The LED drive circuit according to claim 2, wherein the first output filter sub-circuit (12) comprises a first capacitor (C1) and a first resistor (R1);
a first end of the first capacitor (C1) is in connection with a first end of the first resistor (R1) and the first end of the first output filter sub-circuit (12), respectively; and a second end of the first capacitor (C1) is in connection with a second end of the first resistor (R1) and the second end of the first output filter sub-circuit (12), respectively.

4. The LED drive circuit according to any one of claims 1-3, further comprising: a second resistor (R2);
wherein a first end of the second resistor (R2) is in connection with a current detection pin of the first non-isolated LED constant-current driver chip (U1), and a second end of the second resistor (R2) is grounded.

5. The LED drive circuit according to any one of claims 1-3, wherein the external power supply is an alternating-current power supply; and the first voltage input sub-circuit (11) comprises a rectifier bridge (BD1) and a second capacitor (C2);
a first input of the rectifier bridge (BD1) is configured to be connected with a null line of the external power supply, a second end of the rectifier bridge (BD1) is configured to be connected with a live line of the external power supply, a first output of the rectifier bridge (BD1) is in connection with the output of the first voltage input sub-circuit (11) and a first end of the second capacitor(C1), respectively; a second output of the rectifier bridge (BD1) is grounded; and
a second end of the second capacitor (C2) is grounded.

6. The LED drive circuit according to claim 5, wherein the first voltage input sub-circuit (11) further comprises an over-current protection element (F1);
a first end of the over-current protection element (F1) is configured to be connected with the live line of the external power supply, and a second end of the over-current protection element (F1) is in connection with the first input of the rectifier bridge.

7. An LED drive circuit, comprising:
a second voltage input sub-circuit (21), a second non-isolated LED constant-current driver chip (U2), a second inductor (L2), and a second fly-wheel diode (D2);
an input of the second voltage input sub-circuit (21) is configured to be connected with an external power supply, an output of the second voltage input sub-circuit (21) is in connection with a cathode of the second fly-wheel diode (D2), and the output of the second voltage input sub-circuit (21) is further configured to be connected with a positive electrode of an LED string light (LED1);
an anode of the second fly-wheel diode (D2) is in connection with a first end of the second inductor (L2) and a drain of an internal MOSFET of the second non-isolated LED constant-current driver chip (U2), respectively;
a second end of the second inductor (L2) is in connection with a power-supply pin of the second non-isolated LED constant-current driver chip (U2), and the second end of the second inductor (L2) is further configured to be connected with a negative electrode of the LED string light (LED1).

8. The LED drive circuit according to claim 7, further comprising: a second output filter sub-circuit (22);
a first end of the second output filter sub-circuit (22) is in connection with a cathode of the second fly-wheel diode (D2), and a second end of the second output filter sub-circuit (22) is in connection with a second end of the second inductor (L2); and
the second output filter sub-circuit (22) is configured for filtering.

9. The LED drive circuit according to claim 7 or 8, further comprising: a third resistor (R3);
a first end of the third resistor (R3) is in connection with a current detection pin of the second non-isolated LED constant-current driver chip (U2), and a second end of the third resistor (R3) is grounded.

10. A lighting apparatus, comprising: the LED drive circuit as claimed in any one of claims 1 to 6 or the LED drive circuit as claimed in any one of claims 7 to 9.
